# EUROPEAN PATENT SPECIFICATION

(11) **EP 1 559 581 B1**
(45) Date of publication and mention of the grant of the patent: **12.03.2008**
(21) Application number: 04425046.2
(22) Date of filing: 27.01.2004
(51) Int. Cl.: B60B 1/00

(54) **Spoke for a bicycle wheel, bicycle wheel comprising such a spoke and method for manufacturing such a spoke**
Speiche für Fahrradrad und Fahrradrad eine solche Speiche enthaltend sowie Herstellverfahren für eine solche Speiche
Rayon pour roue de bicyclette, roue de bicyclette comprenant un tel rayon et méthode de fabrication d'un tel rayon

(43) Date of publication of application: 03.08.2005
(73) Proprietor: CAMPAGNOLO S.R.L., I-36100 Vicenza (IT)
(72) Inventor: Passarotto, Maurizio, 45100 Rovigo (IT); Meggiolan, Mario, 36051 Creazzo (Vicenza) (IT)
(74) Representative: Castiglia, Paolo

(56) References cited:
- FR-A- 2 707 559
- GB-A- 1 557 342
- US-A- 3 894 777
- US-A- 6 036 279
- US-A1- 2001 054 840

## Description

The present invention relates to a spoke for a bicycle wheel. More specifically, the invention relates to a spoke for a bicycle wheel made of metallic material, a bicycle wheel comprising a plurality of such spokes and a method for manufacturing such a spoke.

As known, the spokes for a bicycle wheel consist of substantially wire-shaped elements, generally made of metal like steel or aluminium or alloys thereof, provided with a first end portion for the attachment to the central part of the wheel consisting of the hub and a second end portion for the attachment to the rim on which the tire is mounted. Typically, the end portion for attachment to the hub is shaped so as to define a widened head intended to be stably housed in suitable seats formed in the hub; the end portion for attachment to the rim, on the other hand, has a threaded zone to allow fastening to the rim and adjustment of the tension of the spoke through the help of a suitable nut or nipple.

In order to enhance the aesthetics and the aerodynamic characteristics of the wheels, flattened spokes have been proposed, i.e. spokes in which the body portion between the two end portions for the attachment to the hub and to the rim is flattened.

An example of a flattened spoke is disclosed in US 6,036,279 to the same Applicant. However, in this case it concerns a flattened spoke made of plastic material reinforced with fibres, in particular carbon fibre; the use of such a material, although advantageous in terms of reduction in the overall weight of the spoke, involves the need to make the spoke in two distinct elements: a first elongated and flattened carbon fibre element in which the head for the attachment to the hub is defined, and a second metallic connection element hinged to a free end of the carbon fibre element and provided with a threading to allow the attachment to the rim and the tensioning of the spoke. The head for the attachment to the hub is flattened and T-shaped; such a head is housed inside a tubular end portion of the hub, on the annular surface of which a seat is radially formed intended to house the portion of the body of the spoke immediately adjacent to the head for the attachment to the hub. The T-shape of the head for the attachment to the hub prevents the spoke from moving in the radial direction of the wheel towards the rim; the movements of the spoke in the axial direction of the wheel are, on the other hand, prevented by the counter action exerted by the front surface of the seat formed in the hub, which defines an abutment surface for the portion of the body of the spoke immediately adjacent to the head and, on the opposite side with respect to the spoke, by an annular edge formed at the free end of the hub and radially bent inwards; such an edge, indeed, defines an abutment surface for an upper portion of the front surface of the head of the spoke.

The Applicant has noted that a spoke of the type disclosed in the patent quoted above has some drawbacks. In particular, the need to manufacture the spoke in two distinct elements involves substantial technical complication, as well as corresponding high production costs.

The Applicant has therefore focused above all upon the design and manufacture of a flattened spoke made of metal material, so as to be able to make the spoke in a single body.

Flattened spokes made of metallic material are known.

A first example of a flattened spoke made of metallic material is disclosed in patent application EP 0 794 071. In particular, this concerns a spoke consisting of a substantially cylindrical wire-shaped element having a widened head for the attachment to the hub with a circular cross section, a threaded end for the attachment to the rim and an intermediate portion having a flattened zone at the crossing zone of the spokes when mounted on the wheel. The head for the attachment to the hub is intended to be housed in a seat formed on the front annular surface of the hub.

The Applicant observes that a spoke of the type disclosed in the patent quoted above has the drawback that possible rotations of the spoke following collisions or vibrations create zones of greater friction with air at the flattened zone of the spoke, thus worsening the aerodynamics of the wheel, with the consequent deterioration of the racing performance. The Applicant also observes that, in a spoke of the type described in the patent quoted above, the presence of an head for the attachment to the hub having a conical profile and a circular cross section implies that, during the assembly and/or tensioning operations of the spoke, the spoke can rotate about its longitudinal axis, forcing the operator to manually hold the spoke until the nut or nipple had been completely screwed onto the threaded end for the attachment to the rim. Moreover, such a patent shows a hub with cylindrical seats, i.e. of a shape different from the head of the spoke, whereby the coupling of the head of the spoke with the hub is problematic.

A second example of a flattened spoke made of metallic material is disclosed in US 6,189,978 B1. In particular, this concerns a spoke consisting of a pair of opposite widened heads for attachment, respectively, to the hub and to the rim of the wheel, and a flattened intermediate portion. The head for the attachment to the hub has a non-circular cross section, in particular quadrangular, to prevent the rotation of the spoke about its longitudinal axis during tensioning. The spoke is intended to be associated' with the hub at a respective seat formed on a respective boss formed on the side surface of the hub extending radially outwards.

The Applicant observes, first of all, that the manufacturing of a hub provided with radial bosses on which the seats for the housing of the head of the spoke are formed is technically complicated. Moreover, the coupling of the head of the spoke with the hub takes place on very small areas and this leads to the breaking of the bosses of the hub. On the other hand, a spoke of the type described in the patent quoted above would not be suitable for being associated with the hub at the front surface thereof; indeed, the particular configuration of the head for the attachment to the hub (widened in the plane transversal to the longitudinal axis of the spoke and squashed along such a longitudinal axis) would not allow a stable housing of such a head at the front surface of the hub, above all due to the limited abutment surface between the side surface of the head for the attachment to the hub and the respective abutment wall of the hub. The Applicant also observes that, in the spoke described in the patent quoted above, the profile and the area of the cross section of the head for the attachment to the hub are substantially different with respect to those of the cross section of the flattened intermediate portion of the spoke (in particular, the area of the cross section of the head for the attachment to the hub is substantially greater than that of the cross section of the flattened intermediate portion of the spoke). This means, as well as inevitable technical complications in the manufacturing of the head for the attachment to the hub, that a heavy spoke is obtained, due to the substantial size of the head for the attachment to the hub. Moreover, the substantial change in section at the passage zone between the intermediate portion of the spoke and the head for the attachment to the hub inevitably implies the generation of a zone with a high concentration of tension just at such a passage zone which, due to the transmission of the driving torque between hub and spoke and because in such a zone the same traction stresses are amplified by local effects linked to the attachment to the hub, is particularly critical.

Further examples of flattened spoke made of metallic material are disclosed in US 2001/0054840, US 3,894,777 and FR 2 707 559. However, the spokes disclosed in these documents do not have a widened head for the attachment to the hub.

The Applicant has focused upon the design and manufacture of flattened spoke made of metal material and having a widened head for the attachment to the hub.

GB 1 557 342 discloses a spoke made of metal material and having a widened head for the attachment to the hub. The passage between the widened head and the flattened central body of the spoke is sharp. This document discloses the features recited in the preamble of claim 1.

The object of the present invention is that of providing a flattened metal spoke which, as well as aesthetically distinguishing itself from those disclosed in the two documents of the prior art discussed above, is suitable for being connected to the hub at the front surface thereof (thus simplifying the manufacturing of the hub), without, at the same time, having the drawbacks outlined above with reference to the flattened spokes of the prior art made of metallic material.

The present invention, therefore, relates, in a first aspect thereof, to a spoke for a bicycle wheel as recited in claim 1.

Throughout the present description and the subsequent claims, the expression "flattened portion", used with reference to the intermediate portion or to the first end portion of the spoke of the present invention, is used to indicate a portion that has been squashed along the transversal direction Z so that the cross section of such a portion has one dimension (typically defining the thickness of the spoke portion in question) substantially smaller than the other dimension (typically defining the width of the spoke portion in question). For example, a spoke portion is flattened when the thickness (or generically a dimension of the cross section) of the spoke portion in question is less than 1.5 times the width (or generically the other dimension of the cross section) of the spoke portion in question. Therefore, the opposite faces of said spoke portion do not necessarily have to be perfectly flat and parallel; i.e. it is also possible for such faces to have a substantially elliptical progression or a substantially circular progression with a wide radius of curvature.

Advantageously, the spoke of the present invention, as well as having the characteristics of aerodynamicity and of pleasant aesthetics typical of flattened spokes, has a body that is flattened both at the intermediate portion of the elongated element constituting the body of the spoke and at the first end portion constituting the head for the attachment to the hub, with the latter gradually joined to the flattened intermediate portion of the spoke. Such a spoke therefore has an aesthetic look which is different from that of the metallic spokes disclosed in the patents of the prior art discussed above. Moreover, the spoke of the present invention is particularly suitable for being associated with the hub at the front surface thereof; indeed, the provision of a head for the attachment to the hub that is flattened in the transversal direction Z ensures a stable housing of such a head in the hub. Even more advantageously, the flattened head, as well as contributing to the manufacturing of a spoke having a lower overall weight with respect to those of the prior art, prevents the rotation of the spoke about its longitudinal axis during tensioning. The spoke of the invention also has characteristics of resistance to the transfer of the driving torque exerted by the hub better than those of the spoke described in US 6,189,978 B1 discussed above; this is due to the fact that it has a head for the attachment to the hub that is flattened and gradually joined to the flattened intermediate portion of the spoke.

Preferably, the thickness of said first end portion is greater than the thickness of said flattened portion. However, embodiments in which the thickness of said first end portion is equal to or less than that of said flattened portion can be foreseen.

Preferably, the flattened portion of said intermediate portion comprises a zone adjacent to said first end portion and said first end portion has a cross section having a profile which is substantially the same as the profile of the cross section of the flattened portion of said intermediate portion at said zone adjacent to said first end portion.

Throughout the present description and the subsequent claims, the term "profile", used with reference to the cross section of any portion of the spoke of the present invention, is used to indicate the shape defined by the outline of such a cross section. The expression "substantially the same profile", used with reference to the sections of the spoke of the present invention, is thus used to indicate that such sections have a substantially identical shape, certainly not necessarily also a substantially identical area. The expression "substantially the same", used with reference to the profiles of the sections of the spoke of the present invention, also embraces the possibility of a not total identity of the profiles, for example due to joins, or bevels or tapers. For example, in the context of the present invention, a rectangular profile is to be considered substantially the same as an elliptical profile (or circular with a wide radium of curvature) with opposite faces that are squashed (not necessarily flat) and/or gradually joined.

Advantageously, the gradual passage from the flattened intermediate portion of the spoke to the head for the attachment to the hub is thus achievable thanks also to the fact that near to such a passage zone the flattened intermediate portion of the spoke and the head for the attachment to the hub have substantially the same profile in cross section.

Preferably, said second end portion is threaded and said intermediate portion comprises a cylindrical portion extending along said longitudinal axis X-X and adjacent to said second end portion.

Preferably, the flattened portion of said intermediate portion has, along said longitudinal axis X-X, cross sections of different area. Even more preferably, the flattened portion of said intermediate portion has, along said longitudinal axis X-X, cross sections of increasing area towards said zone of said flattened portion adjacent to said first end portion and towards said cylindrical portion adjacent to said second end portion. Advantageously, the spoke of the invention thus has a small amount of material in its central zone, where the traction stresses are not amplified by local effects related to the attachment to the hub and/or to the rim. This characteristic advantageously allows the overall weight of the spoke of the invention to be reduced with respect to known spokes which have cross sections of constant area for the entire length on which they extend.

Preferably, said first end portion comprises at least one substantially flat front surface extending along said longitudinal axis X-X and defining a front abutment surface of said first end portion on a bicycle wheel hub when said spoke is associated with said hub. Advantageously, the provision in the spoke of the invention of a substantially flat front abutment surface provided in the hub, suitable for cooperating in abutment against a corresponding front abutment surface which is also substantially flat, makes easier the assembly and the tensioning of the spoke of the present invention, preventing it from rotating about its axis, and contributes to achieving a stable connection of the spoke on the hub, avoiding that possible torsions of the spoke caused by collisions or vibrations could alter the desired characteristics of aerodynamics and aesthetics.

Preferably, said at least one front surface extends along said longitudinal axis X-X for a length portion greater than the dimension of said first end portion in said transversal direction Z. Such a structural characteristic contributes to achieving the advantageous characteristics discussed above.

Preferably, said first end portion comprises, along said longitudinal axis X-X, a pair of opposite portions of substantially cylindrical side surfaces defining side and axial abutment surfaces of said first end portion on a bicycle wheel hub when said spoke is associated with said hub. Advantageously, the provision in the spoke of the invention of substantially cylindrical side surfaces, suitable for cooperating in abutment against corresponding side surface portions of matching shape provided in the hub, allows the self-alignment of the spoke of the invention during its assembly onto the rim, thanks to the small adjustment movements that are allowed by the relative sliding of the matching surfaces defined above.

In a second aspect thereof, the invention relates to a bicycle wheel, comprising:
- a hub;
- a rim;
- a plurality of spokes extending between said hub and said rim;
characterised in that the spokes of said plurality of spokes are of the type described above. In particular, each spoke of said plurality of spokes, in its most general embodiment, comprises an elongated body of metallic material extending along a longitudinal axis X-X and having:
- a first end portion connected to said hub;
- a second end portion connected to said rim;
- an intermediate portion between said first and second end portions, in which said intermediate portion comprises a portion which is flattened in a transversal direction Z perpendicular to said longitudinal axis X-X and extending along said longitudinal axis X-X up to said first end portion;
in which said first end portion of said spoke is flattened in said transversal direction Z and is gradually joined to said flattened portion of said intermediate portion of said spoke along said longitudinal axis X-X.

Such a wheel has all of the advantageous characteristics discussed above with reference to the spoke of the present invention.

Preferably, said hub comprises an annular front surface on which a plurality of seats are formed for the housing of said first end portions of said spokes.

Even more preferably, each of said first end portions of spoke comprises at least one first substantially flat front surface extending along said longitudinal axis X-X and operating in abutment against a corresponding substantially flat front surface of a respective seat formed in the hub.

Preferably, said front surfaces of said first end portion of spoke and of said seat extend along said longitudinal axis X-X for a length portion greater than the dimension of said first end portion of spoke in said transversal direction Z.

Preferably, each of said first end portions of spoke comprises a pair of opposite portions of substantially cylindrical side surface which operate in abutment against corresponding opposite portions of side surface of a respective seat formed in the hub, in which said side surfaces of each of said seats have a shape matching that of said side surfaces of said first end portions of spoke.

In a first embodiment of the wheel of the present invention, said seats are formed on said front surface of the hub according to a substantially tangential orientation.

In an alternative embodiment of the wheel of the present invention, said seats are formed on said front surface of the hub according to a substantially radial orientation.

In a third aspect thereof, the invention relates to a method for manufacturing a spoke for a bicycle wheel as recited in claim 18.

Preferably, the method of the present invention comprises, before step d), a step of shaping said free end of the flattened filament portion to define an head for attachment to the hub gradually joined to the remaining flattened filament portion. Such a step can be carried out at the same time as or after step c) defined above.

In a first embodiment thereof, step a) of cutting the filament occurs starting from a metallic wire having a cross section with an area equal to the desired area of the cross section of the head for attachment to the hub.

In an alternative embodiment of the method of the present invention, step a) of cutting the filament occurs starting from a metallic wire having a cross section with an area equal to the area of the cross section of the desired head for attachment to the rim.

Preferably, in both of the embodiments discussed above, step b) of shaping the filament comprises the step of plastically deforming the filament to obtain cross sections of increasing area starting from said intermediate portion of filament towards said free ends. Even more preferably, step b) comprises an intermediate step of carrying out an annealing heat treatment to promote the reduction in hardness of the material and to increase its deformability.

Preferably, in both of the embodiments discussed above, step c) of squashing the filament is carried out by moulding or lamination. Even more preferably, step c) comprises an intermediate step of carrying out an annealing heat treatment to promote the reduction in hardness of the material and to increase its deformability.

Preferably, when starting from a metallic wire having a cross section with an area equal to the area of the cross section of the desired head for attachment to the hub, step d) of shaping the free end of the flattened filament portion is carried out through squashing by moulding. On the other hand, in the case in which one starts from a metallic wire having a cross section of area equal to the area of the cross section of the desired head for attachment to the rim, step d) of shaping the free end of the flattened filament portion takes place through upsetting.

In a first preferred embodiment of the method of the present invention, step f) of threading the second free end of the filament is carried out by rolling on a filament having a predetermined pre-processing diameter according to the desired threading and less than the diameter of the desired head for attachment to the rim.

In an alternative preferred embodiment, step f) of threading the second free end of the filament is carried out by a shaving-removal operation from a filament having a pre-processing diameter according to the desired threading and equal to or greater than the diameter of the desired head for attachment to the rim.

Preferably, the method of the present invention also comprises the final step of carrying out a surface protection treatment.

The methods described above advantageously allow a spoke to be obtained having sections of different area along its length. In particular, such methods allow a spoke to be obtained with a small amount of material in its central zone, where the traction stresses are not amplified by local effects related to the attachment to the hub and to the rim. This advantageously allows the overall weight of the spoke of the present invention to be reduced with respect to known spokes, having constant area values for the entire length on which they extend.

Further characteristics and advantages of the present invention shall become clearer from the following detailed description of a preferred embodiment thereof, given with reference to the attached drawings. In such drawings,
- figure 1 is an enlarged schematic front view of a spoke for a bicycle wheel according to the present invention;
- figure 2 is a schematic side view of the spoke of figure 1;
- figure 3 is an enlarged schematic perspective view of an end portion of the spoke of figure 1;
- figures 4a-4d represent different cross sections of the spoke of figure 1 taken at the different section lines shown in figure 1, for each section the equivalent circle also being represented, the area of which is equal to the area of the section in question;
- figure 5 is a schematic perspective view, from a first point of view, of a central portion of the wheel of the present invention in a first embodiment thereof;
- figure 6 is an enlarged schematic section view of a portion of hub of the wheel of the present invention;
- figure 7 is a schematic perspective view of a central portion of the wheel of the present invention in a second embodiment thereof.

In the attached figures, a spoke for bicycle wheels according to the present invention is indicated with 10. The spoke 10 comprises an elongated body 20 of metallic material like steel or aluminium or alloys thereof (preferably aluminium alloy) extending along a longitudinal axis X-X. Such a type of spoke is intended to be used in a bicycle wheel to connect a hub 100 (illustrated in figures from 5 to 7) to a rim (not illustrated).

The body 20 of the spoke 10 of the present invention comprises a first end portion 30 defining a head for the attachment to the hub, a second threaded end portion 40 defining a zone for the attachment to the rim and an intermediate portion 50. Such an intermediate portion 50 in turn comprises a portion 60 which is flattened in a transversal direction Z perpendicular to the longitudinal axis X-X of the spoke 10 and extending along said longitudinal axis X-X up to the head 30 for the attachment to the hub; on the opposite side, the intermediate portion 50 comprises a cylindrical portion 70 extending along the longitudinal axis X-X up to the head 40 for the attachment to the rim.

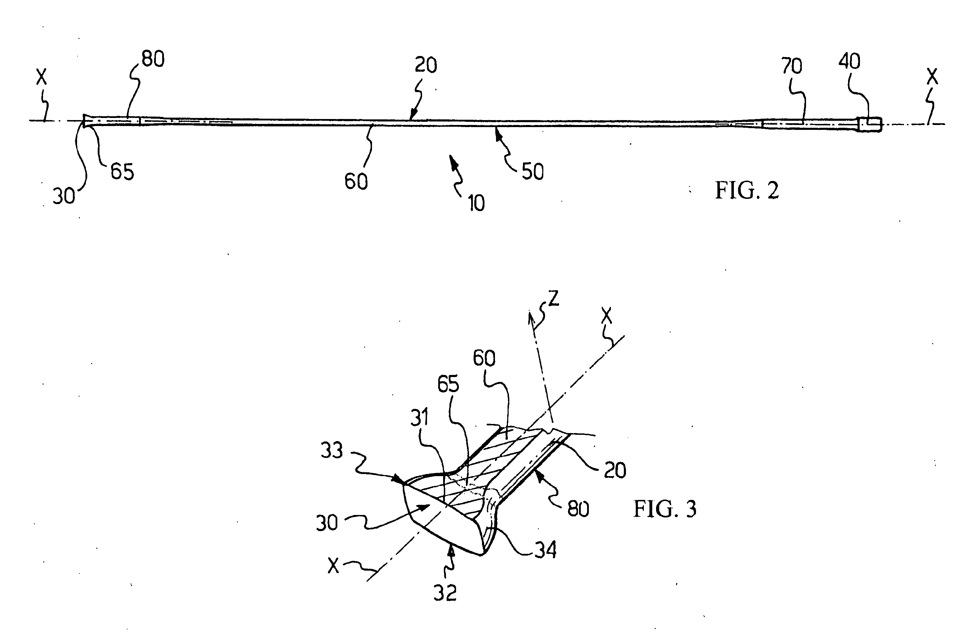

The head 30 for the attachment to the hub is also flattened in the transversal direction Z and is gradually joined, along the longitudinal axis X-X of the intermediate portion 50, to the flattened portion 60 of the elongated body 20 through a joining zone 65 (visible in detail in figure 3).

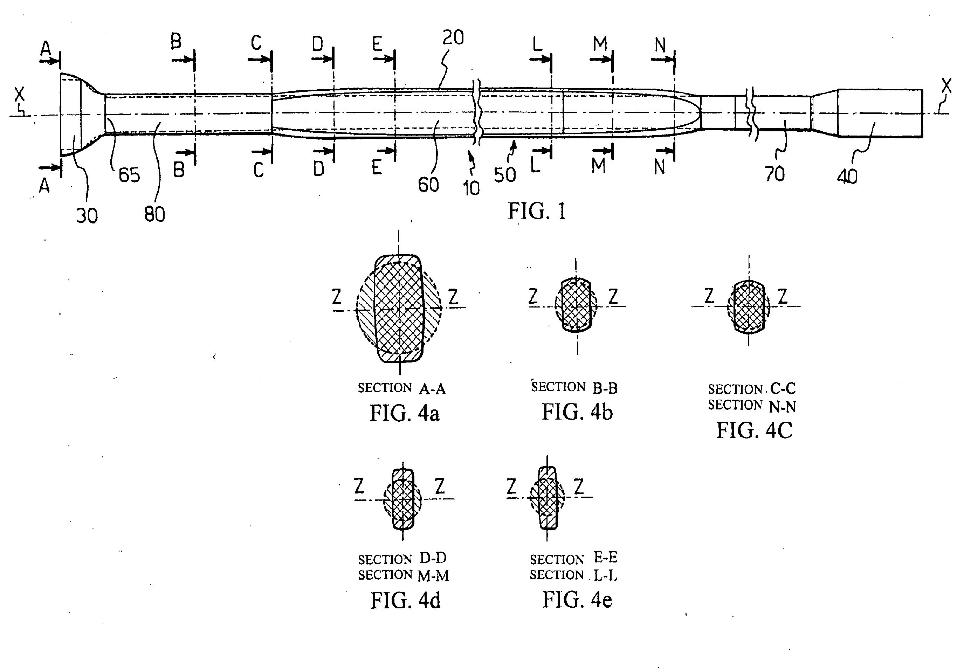

As better illustrated in figures 4a-4e, the elongated body 20 has, along the longitudinal axis X-X, cross sections having substantially the same profiles (or else shapes), i.e. sections all being substantially rectangular, elliptical or circular in shape with a wide radium of curvature, with squashed - not necessarily flat - and/or gradually joined opposite faces. In particular, the head 30 for the attachment to the hub has a cross section having substantially the same profile as the cross section of the flattened portion 60 of the intermediate portion 50 of the elongated body 20 at a zone 80 thereof adjacent to the head 30 for the attachment to the hub (figures 4a and 4b).

Whilst having substantially the same profiles, the cross sections of the flattened portion 60 of the intermediate portion 50 of the elongated body 20 have a different area, starting from the section A-A at the head 30 for the attachment to the hub up to the section N-N close to the cylindrical portion 70 adjacent to the head 40 for the attachment to the rim. In particular, the flattened portion 60 of the intermediate portion 50 of the elongated body 20 has, along the longitudinal axis X-X, cross sections of increasing area towards the zone 80 adjacent to the head 30 for the attachment to the hub and towards the cylindrical portion 70 adjacent to the head 40 for the attachment to the rim. The spoke of the invention thus has a small amount of material in its central zone, whereas it is more solid near to the heads for the attachment to the hub and to the rim, whilst still keeping, along the entire length for which it extends, substantially the same profile of the cross sections.

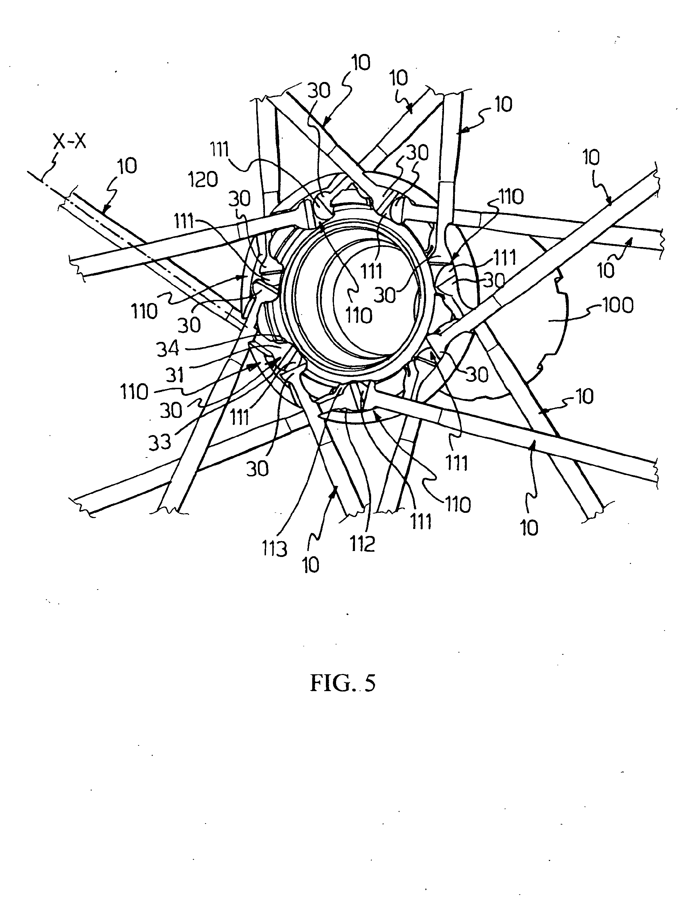

The head 30 for the attachment to the hub comprises a pair of opposite front surfaces 31, 32, respectively front and rear, that are substantially flat; such surfaces 31 and 32 extend along the longitudinal axis X-X of the spoke for a portion of length that is greater than the dimension of the head 30 in the transversal direction Z (figure 3). One of the front surfaces 31, 32, in the attached figures the surface 32, defines a front abutment surface of the head 30 on the hub 100 of the bicycle wheel when the spoke 10 is mounted on the hub, as shall be better described hereafter with reference to figures 5-7. The surfaces 31 and 32 are slightly flared outwards, so that the head 30 is, in the transversal direction Z, greater in thickness than the thickness of the flattened portion 60. Such surfaces could also be substantially straight or narrow inwards, so that the head 30 has substantially the same or smaller thickness with respect to the thickness of the flattened portion 60.

The head 30 for the attachment to the hub also comprises, along the longitudinal axis X-X, a pair of substantially cylindrical side surface portions 33, 34 arranged symmetrically with respect to the longitudinal axis X-X; each of such opposite surfaces defines a side and axial abutment surface of the head 30 on the hub 100 of the bicycle wheel when the spoke 10 is mounted on the hub, as shall be better described hereafter with reference to figures 5-7.

The hub 100 comprises a plurality of seats 110 formed on a front annular surface 120 thereof; each of the seats 110 is intended to receive the head 30 of a respective spoke 10 when it is mounted on the hub. In particular, each seat 110 comprises a substantially flat front surface 111. When the spoke 10 is mounted on the hub 100, the head 30 is housed in the seat 110 arranging the front surface 32 of the head 30 in abutment against the front surface 111 of the seat 110, as shown in figures 5-7.

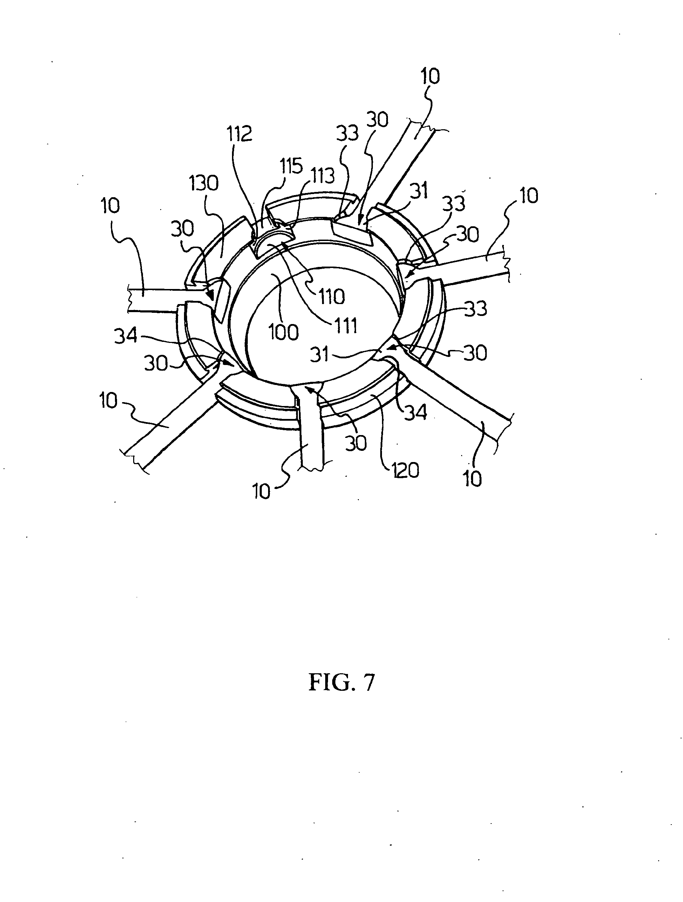

Each seat 110 also comprises a pair of side surface portions 112, 113 of a shape matching the side surface portions 33, 34 of the head 30 (figure 7); these portions, when the spoke 10 is mounted on the hub, are arranged in abutment against the side surfaces 112, 113 of the seat 110, as shown in figures 5-7.

The seats 110 also comprise a seat portion 115 intended to receive the body portion 20 immediately adjacent to the head 30.

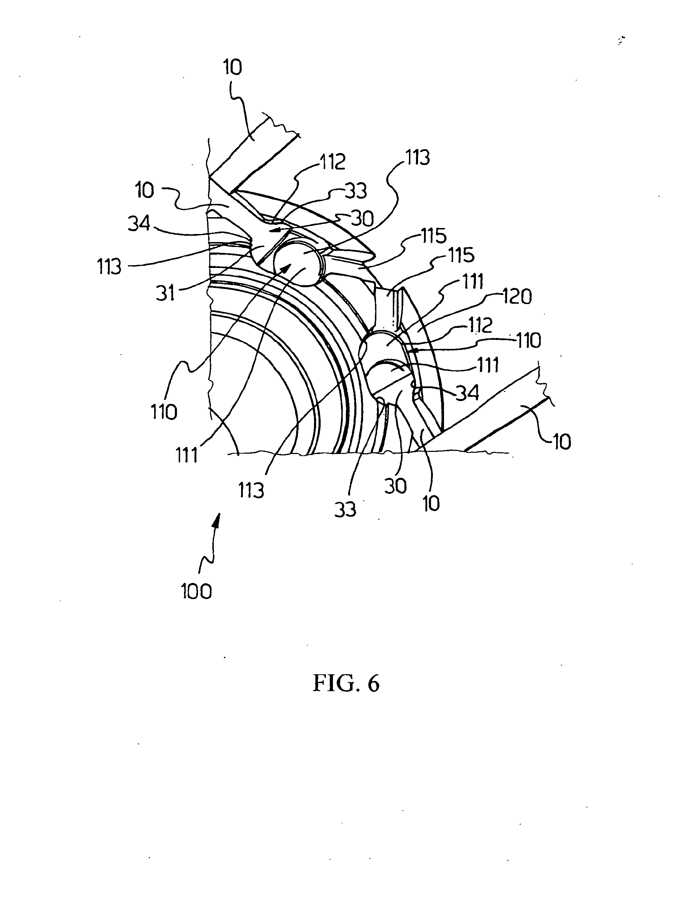

In the embodiment of the wheel of the present invention illustrated in figures 5 and 6, the seats 110 of the hub 100 are orientated according to an orientation substantially tangential to the front annular surface 120 of the hub; in particular, the seats 110 are alternatively formed on two different planes of said front surface 120 and orientated substantially tangentially in the opposite direction so as to realise a wheel configuration with crossed spokes. In such an embodiment, the movement of the spokes in the direction of the axis of the hub outwards is prevented preferably by associating an annular counter element (not illustrated) with the hub at the front surface 120 of the hub, such an element being suitable for operating in abutment against the spokes 10 at the zone in which they cross over.

In the embodiment of the wheel of the present invention illustrated in figure 7, the seats 100 are orientated according to a substantially radial orientation. Also in such an embodiment, the movement of the spokes in the direction of the axis of the hub outwards is prevented by associating an annular counter element 130 with the hub at the front surface 120 of the hub, such an element being suitable for operating in abutment against the front surfaces 31 of the heads 30 of the spokes 10.

The manufacturing of the spoke 10 of the present invention can be carried out starting from a wire of metallic material in an annealed state having a cross section of area equal to the area of the cross section of the desired head for attachment to the hub or from a wire of metallic material in an annealed state having a cross section of smaller area than the area of the cross section of the desired head for attachment to the hub, and in particular with a diameter equal to or smaller than that of the section of the desired head for attachment to the rim.

In the case in which the area of the starting section of the wire of metallic material is equal to that of the section of the desired head for attachment to the hub, one proceeds by firstly cutting a filament of predetermined length having a circular section from such a starting wire. Then the filament is shaped through plastic deformation, cold or hot (for example through hammering), to obtain cross sections (generally circular) of different areas between the head for attachment to the hub and the head for attachment to the rim. Optionally, an intermediate annealing heat treatment can be carried out to promote the reduction in hardness of the material and to increase its deformability.

One then proceeds with a step of squashing the filament by cold or hot plastic deformation in the various zones along the longitudinal axis of the filament to obtain the desired squashed profile. Such a squashing step can for example carried out by moulding (using a suitably shaped mould and countermould) or by lamination (passing the filament through a pair of suitably shaped rollers). Also in this case, optionally, an intermediate annealing heat treatment can be carried out to promote the reduction in hardness of the material and to increase its deformability.

One then proceeds with the shaping of the head for attachment to the hub. Such a step comprises a squashing by moulding of the head for attachment to the hub and can be carried out at the same time as the squashing step of the filament mentioned above.

Then the calibration of the length of the spoke is carried out through trimming or butting of the head for attachment to the hub.

The filament is then subjected to a drawing temper heat treatment to increase its mechanical characteristics.

One then proceeds with the threading of the head for attachment to the rim. Such a threading can be carried out by rolling or by a shaving-removal operation. In the case of threading by rolling, the operation requires that the profile of the thread is obtained by plastic deformation starting from a filament with a pre-processing diameter smaller than the diameter of the head for attachment to the rim. In the case of threading by shaving-removal, the operation requires that the profile of the thread is obtained by removal of material from a filament with a pre-processing diameter equal to (or possibly greater than) that of the head for attachment to the rim.

Finally, an anodisation or painting surface protection treatment is carried out.

On the other hand, in the case in which the area of the starting section of the wire of metallic material is smaller than that of the section of the desired head for attachment to the hub, one proceeds by firstly cutting a filament of predetermined length having a circular section from a starting wire having a diameter equal to or greater than that of the desired head for attachment to the rim. The steps of the method for manufacturing the spoke are totally identical to those described above, with the sole difference that the shaping of the head for attachment to the hub is carried out in this case by upsetting; in particular, during such a step the section of the head is progressively increased through axial movement of the material until the desired section is obtained.

The manufacturing methods described above advantageously allow a spoke to be obtained having sections of different area along its length. In particular, such methods allow a spoke to be obtained with a small amount of material in its central zone, where the traction stresses are not amplified by local effects related to the attachment to the hub and/or to the rim. This advantageously allows the overall weight of the spoke of the present invention to be reduced with respect to known spokes, having cross sections of constant area for the entire length on which they extend.

## Claims

1. Spoke (10) for a bicycle wheel, comprising an elongated body (20) of metallic material extending along a longitudinal axis X-X and having:
- a first end portion (30) for the attachment to a hub (100) of a bicycle wheel; said first end portion (30) being so shaped as to define a widened head having an abutment surface to the hub;
- a second end portion (40) for the attachment to a rim of a bicycle wheel;
- an intermediate portion (50) between said first and second end portions (30, 40), in which said intermediate portion (50) comprises a portion (60) which is flattened in a transversal direction Z perpendicular to said longitudinal axis X-X and extending along said longitudinal axis X-X up to said first end portion (30);
wherein said first end portion (30) is flattened in said transversal direction Z; **characterised in that** said abutment surface of said widened head is gradually joined to said flattened portion (60) of said intermediate portion (50) along said longitudinal axis X-X.

2. Spoke according to claim 1, wherein the thickness of said first end portion (30) is greater than the thickness of said flattened portion (60).

3. Spoke according to claim 1, wherein the thickness of said first end portion (30) is substantially the same as the thickness of said flattened portion (60).

4. Spoke according to claim 1, wherein the thickness of said first end portion (30) is smaller than the thickness of said flattened portion (60).

5. Spoke according to any one of the previous claims, wherein said flattened portion (60) of said intermediate portion (50) comprises a zone (80) adjacent to said first end portion (30) and wherein said first end portion (30) has a cross section having a profile which is substantially the same as the profile of the cross section of said flattened portion (60) of said intermediate portion (50) at said zone (80) adjacent to said first end portion (30).

6. Spoke according to any one of the previous claims, wherein said second end portion (40) is threaded and wherein said intermediate portion (50) comprises a cylindrical portion (70) extending along said longitudinal axis X-X and adjacent to said second end portion (40).

7. Spoke according to any one of the previous claims, wherein said flattened portion (60) of said intermediate portion (50) has, along said longitudinal axis X-X, cross sections of different area.

8. Spoke according to claim 7, wherein said flattened portion (60) of said intermediate portion (50) has, along said longitudinal axis X-X, cross sections of increasing area towards said zone (80) of said flattened portion (60) adjacent to said first end portion (30) and towards said cylindrical portion (70) adjacent to said second end portion (40).

9. Spoke according to any one of the previous claims, wherein said first end portion (30) comprises at least one substantially flat front surface (31, 32) extending along said longitudinal axis X-X and defining a front abutment surface of said first end portion (30) on a hub (100) of a bicycle wheel when said spoke (10) is associated with said hub (100).

10. Spoke according to claim 9, wherein said at least one front surface (31, 32) extends along said longitudinal axis X-X for a length portion greater than the dimension of said first end portion (30) in said transversal direction Z.

11. Spoke according to any one of the previous claims, wherein said first end portion (30) comprises, along said longitudinal axis X-X, a pair of substantially cylindrical opposite side surface portions (33, 34) defining side and axial abutment surfaces of said first end portion (30) on a hub (100) of a bicycle wheel when said spoke (10) is associated with said hub (100).

12. Bicycle wheel, comprising:
- a hub (100);
- a rim;
- a plurality of spokes (10) extending between said hub (100) and said rim;
**characterised in that** the spokes (10) of said plurality of spokes are of the type claimed in any one of claims from 1 to 11.

13. Bicycle wheel according to claim 12, wherein said hub (100) comprises a front annular surface (120) on which a plurality of seats (110) are formed for housing said first end portions (30) of said spokes (10).

14. Bicycle wheel according to claim 13, wherein each of said first end portions (30) of spoke comprises at least one first substantially flat front surface (31, 32) extending along said longitudinal axis X-X and operating in abutment against a corresponding substantially flat front surface (111) of a respective seat (110) formed in the hub (100).

15. Bicycle wheel according to claim 13 or 14, wherein each of said first end portions (30) of spoke comprises a pair of substantially cylindrical opposite side surface portions (33, 34) which operate in abutment against corresponding opposite side surface portions (112, 113) of a respective seat (110) formed in the hub (100), wherein said side surfaces (112, 113) of each of said seats (110) have a shape matching that of said side surfaces (33, 34) of said first end portions (30) of spoke.

16. Bicycle wheel according to any one of claims from 13 to 15, wherein said seats (110) are formed on said front surface (120) of the hub (100) according to a substantially tangential orientation.

17. Bicycle wheel according to any one of claims from 13 to 15, wherein said seats (110) are formed on said front surface (120) of the hub (100) according to a substantially radial orientation.

18. Method for manufacturing a spoke (10) for a bicycle wheel according to any one of claims from 1 to 11, comprising the steps of:
a) cutting a filament of predetermined length having a circular section from a wire of metallic material in annealed state having a predetermined diameter;
b) shaping the filament to obtain cross sections of different area along its longitudinal axis;
c) squashing the filament along its longitudinal axis to obtain at least one flattened filament portion extending from a first free end of the filament intended to define a widened head (30) for the attachment to the hub up to a flattened portion (60) of an intermediate section of the filament; said widened head (30) having an abutment surface to the hub which is gradually joined to said flattened portion (60);
d) calibrating the length of the flattened filament;
e) subjecting the flattened filament to a drawing temper heat treatment;
f) threading a second free end of the filament to define a threaded head for the attachment to the rim.

19. Method according to claim 18, also comprising, before step d), a step of shaping said free end of the flattened filament portion to define a head for the attachment to the hub gradually joined to the remaining flattened filament portion.

20. Method according to claim 19, wherein step a) of cutting the filament is carried out starting from a metallic wire having a cross section with an area equal to the desired area of the cross section of the head for attachment to the hub.

21. Method according to claim 19, wherein step a) of cutting the filament is carried out starting from a metallic wire having a cross section with an area equal to the desired area of the cross section of the head for the attachment to the rim.

22. Method according to any one of claims from 19 to 21, wherein step b) of shaping the filament comprises the step of plastically deforming the filament to obtain cross sections of increasing area starting from said intermediate portion of filament towards said free ends.

23. Method according to claim 22, wherein step b) comprises an intermediate step of carrying out an annealing heat treatment.

24. Method according to any one of claims from 18 to 23, wherein step c) of squashing the filament is carried out by moulding or lamination.

25. Method according to claim 24, wherein step c) comprises an intermediate step of carrying out an annealing heat treatment.

26. Method according to any one of claims from 18 to 20 and from 22 to 25, wherein step d) of shaping the free end of the flattened filament portion is carried out through squashing by moulding.

27. Method according to any one of claims 18, 19 and from 22 to 25, wherein step d) of shaping the free end of the flattened filament portion is carried out by upsetting.

28. Method according to any one of the previous claims, wherein step f) of threading the second free end of the filament is carried out by rolling on a filament having a predetermined pre-processing diameter according to the desired threading and less than the diameter of the desired head for attachment to the rim.

29. Method according to any one of claims from 18 to 27, wherein step f) of threading the second free end of the filament is carried out by shaving-removal from a filament having a pre-processing diameter according to the desired threading and equal to or greater than the diameter of the desired head for attachment to the rim.

30. Method according to any one of claims 18 to 29, also comprising, after step f), the step of carrying out a surface protection treatment.

## Patentansprüche

1. Speiche (10) für ein Fahrradrad, umfassend einen länglichen Körper (20) aus Metallmaterial, der sich entlang einer Längsachse X-X erstreckt und Folgendes aufweist:
- einen ersten Endteil (30) zum Anbringen an einer Nabe (100) eines Fahrradrades, wobei der erste Endteil (30) so geformt ist, um einen aufgeweiteten Kopf mit einer Anlagefläche an der Nabe zu bilden,
- einen zweiten Endteil (40) zum Anbringen an einer Felge eines Fahrradrades,
- einen Zwischenteil (50) zwischen dem ersten und dem zweiten Endteil (30, 40), wobei der Zwischenteil (50) einen Teil (60) umfasst, der in einer Querrichtung Z, senkrecht zu der Längsachse X-X, abgeflacht ist und sich entlang der Längsachse X-X bis zu dem ersten Endteil (30) erstreckt, wobei der erste Endteil (30) in der Querrichtung Z abgeflacht ist, **dadurch gekennzeichnet, dass** die Anlagefläche des aufgeweiteten Kopfes stufenweise mit dem abgeflachten Teil (60) des Zwischenteils (50) entlang der Längsachse X-X verbunden ist.

2. Speiche nach Anspruch 1, wobei die Dicke des ersten Endteils (30) größer als die Dicke des abgeflachten Teils (60) ist.

3. Speiche nach Anspruch 1, wobei die Dicke des ersten Endteils (30) im Wesentlichen dieselbe wie die Dicke des abgeflachten Teils (60) ist.

4. Speiche nach Anspruch 1, wobei die Dicke des ersten Endteils (30) kleiner als die Dicke des abgeflachten Teils (60) ist.

5. Speiche nach einem der vorhergehenden Ansprüche, wobei der abgeflachte Teil (60) des Zwischenteils (50) einen Bereich (80) umfasst, der an den ersten Endteil (30) angrenzt, und wobei der erste Endteil (30) einen Querschnitt hat, der ein Profil aufweist, das im Wesentlichen dasselbe wie das Profil des Querschnitts des abgeflachten Teils (60) des Zwischenteils (50) an dem Bereich (80) angrenzend an den ersten Endteil (30) ist.

6. Speiche nach einem der vorhergehenden Ansprüche, wobei der zweite Endteil (40) mit Gewinde versehen ist und wobei der Zwischenteil (50) einen zylindrischen Teil (70) umfasst, der sich entlang der Längsachse X-X und angrenzend an den zweiten Endteil (40) erstreckt.

7. Speiche nach einem der vorhergehenden Ansprüche, wobei der abgeflachte Teil (60) des Zwischenteils (50) entlang der Längsachse X-X Querschnitte verschiedener Fläche hat.

8. Speiche nach Anspruch 7, wobei der abgeflachte Teil (60) des Zwischenteils (50) entlang der Längsachse X-X Querschnitte zunehmender Fläche in Richtung auf den Bereich (80) des abgeflachten Teils (60), angrenzend an den ersten Endteil (30), und in Richtung auf den zylindrischen Teil (70), angrenzend an den zweiten Endteil (40), hat.

9. Speiche nach einem der vorhergehenden Ansprüche, wobei der erste Endteil (30) wenigstens eine im Wesentlichen flache Frontfläche (31, 32) hat, die sich entlang der Längsachse X-X erstreckt und die eine Frontanlagefläche des ersten Endteils (30) auf einer Nabe (100) eines Fahrradrades bildet, wenn die Speiche (10) mit der Nabe verbunden (100) wird.

10. Speiche nach Anspruch 9, wobei die wenigstens eine Frontfläche (31, 32) sich für einen Längenanteil entlang der Längsachse X-X erstreckt, der größer als die Abmessung des ersten Endteils (30) in der Querrichtung Z ist.

11. Speiche nach einem der vorhergehenden Ansprüche, wobei der erste Endteil (30) entlang der Längsachse X-X ein Paar von im Wesentlichen zylindrischen gegenüberliegenden Seitenflächenteilen (33, 34) umfasst, das seitliche und axiale Anlageflächen des ersten Endteils (30) auf einer Nabe (100) eines Fahrradrades bildet, wenn die Speiche (10) mit der Nabe (100) verbunden wird.

12. Fahrradrad, umfassend:
- eine Nabe (100).
- eine Felge,
- eine Vielzahl von Speichen (10), die sich zwischen der Nabe (100) und der Felge erstreckt,
**dadurch gekennzeichnet, dass** die Speichen (10) der Vielzahl von Speichen des Typs sind, der in einem der Ansprüche 1 bis 11 beansprucht wird.

13. Fahrradrad nach Anspruch 12, wobei die Nabe (100) eine ringförmige Frontfläche (120) umfasst, auf der eine Vielzahl von Aufnahmen (110) zum Aufnehmen der ersten Endteile (30) der Speichen (10) ausgebildet ist.

14. Fahrradrad nach Anspruch 13, wobei jeder der ersten Endteile (30) der Speichen wenigstens eine erste im Wesentlichen flache Frontfläche (31 32) umfasst, die sich entlang der Längsachse X-X erstreckt und die in Anlage an einer entsprechenden im Wesentlichen flachen Frontfläche (111) einer jeweiligen in der Nabe (100) ausgebildeten Aufnahme (110) wirksam wird.

15. Fahrradrad nach Anspruch 13 oder 14, wobei jeder der ersten Endteile (30) der Speichen ein Paar von im Wesentlichen zylindrischen gegenüberliegenden Seitenflächen (33, 34) umfasst, das in Anlage an entsprechenden gegenüberliegenden Seitenflächenteilen (112, 113) einer jeweiligen Aufnahme (110), die in der Nabe (100) ausgebildet ist, wirksam wird, wobei die Seitenflächen (112, 113) jeder der Aufnahmen (110) eine Form aufweisen, die an die der ersten Endteile (30) der Speichen angepasst ist.

16. Fahrradrad nach einem der Ansprüche 13 bis 15, wobei die Aufnahmen (110) entsprechend einer im Wesentlichen tangentialen Ausrichtung auf der Frontfläche (120) der Nabe (100) ausgebildet sind.

17. Fahrradrad nach einem der Ansprüche 13 bis 15, wobei die Aufnahmen (110) entsprechend einer im Wesentlichen radialen Ausrichtung in der Frontfläche (120) der Nabe (100) ausgebildet werden.

18. Verfahren zum Herstellen einer Speiche (10) für ein Fahrradrad nach einem der Ansprüche 1 bis 11, die folgenden Schritte umfassend:
a) Schneiden eines Drahtes vorgegebener Länge mit einem kreisrunden Querschnitt aus einem Draht-Metallmaterial in gehärtetem Zustand, das einen vorgegebenen Durchmesser aufweist,
b) Formen des Drahtes, um Querschnitte verschiedener Fläche entlang seiner Längsachse zu erhalten,
c) Quetschen des Drahtes entlang seiner Längsachse, um wenigstens einen abgeflachten Drahtteil zu erhalten, der sich von einem ersten freien Ende des Drahtes, das vorgesehen ist, um den aufgeweiteten Kopf (30) zum Anbringen an der Nabe zu bilden, bis zu einem abgeflachten Teil (60) eines Zwischenabschnitts des Drahtes erstreckt, wobei der aufgeweitete Kopf (30) eine Anlagefläche an die Nabe aufweist, die stufenweise mit dem abgeflachten Teil (60) verbunden ist,
d) Kalibrieren der Länge des abgeflachten Drahtes,
e) Aussetzen des abgeflachten Drahtes gegenüber einer thermischen Behandlung des Ziehglühens und
f) Gewindeschneiden an einem zweiten freien Ende des Drahtes, um einen Gewindekopf zum Anbringen an der Felge zu bilden.

19. Verfahren nach Anspruch 18, das außerdem vor dem Schritt d) einen Schritt des Formens des freien Endes des abgeflachten Drahtteils umfasst, um einen Kopf zum Anbringen an der Nabe, der stufenweise mit dem restlichen abgeflachten Drahtteil verbunden ist, zu bilden.

20. Verfahren nach Anspruch 19, wobei Schritt a) des Schneidens des Drahtes ausgehend von einem Metalldraht mit einem Querschnitt mit einer Fläche gleich der Soll-Fläche des Querschnitts des Kopfes zum Anbringen an der Nabe ausgeführt wird.

21. Verfahren nach Anspruch 18, wobei Schritt a) des Schneidens des Drahtes ausgehend von einem Metalldraht mit einem Querschnitt mit einer Fläche gleich der Soll-Fläche des Querschnitts des Kopfes zum Anbringen an der Felge ausgeführt wird.

22. Verfahren nach einem der Ansprüche 18 bis 21, wobei Schritt b) des Formens des Drahtes den Schritt des plastischen Verformens des Drahtes umfasst, um beginnend von dem Zwischenteil des Drahtes in Richtung auf die freien Enden Querschnitte zunehmender Fläche zu erhalten.

23. Verfahren nach Anspruch 22, wobei Schritt b) einen Zwischenschritt des Ausführens einer thermischen Härtungsbehandlung umfasst.

24. Verfahren nach einem der Ansprüche 18 bis 23, wobei Schritt c) des Quetschens des Drahtes durch Formpressen oder Überwalzung ausgeführt wird.

25. Verfahren nach Anspruch 24, wobei Schritt c) einen Zwischenschritt des Ausführens einer thermischen Härtungsbehandlung umfasst.

26. Verfahren nach einem der Ansprüche 18 bis 20 und von 22 bis 25, wobei Schritt d) des Formens des freien Endes des abgeflachten Drahtteils durch Quetschen mittels Formpressens ausgeführt wird.

27. Verfahren nach einem der Ansprüche 18, 19 und von 22 bis 25, wobei der Schritt d) des Formens des freien Endes des abgeflachten Drahtteils durch Stauchen ausgeführt wird.

28. Verfahren nach einem der vorhergehenden Ansprüche, wobei der Schritt f) des Gewindeschneidens an dem zweiten freien Ende des Drahtes durch Walzen auf einem Draht mit einem vorgegebenen Vorverarbeitungsdurchmesser entsprechend dem Soll-Gewinde und kleiner als der Durchmesser des Soll-Kopfes zum Anbringen an der Felge ausgeführt wird.

29. Verfahren nach einem der Ansprüche 18 bis 27, wobei Schritt f) des Gewindeschneidens an dem zweiten freien Ende des Drahtes durch Gratentfernung von einem Draht mit einem Vorverarbeitungsdurchmesser entsprechend dem Soll-Gewinde und gleich dem Durchmesser des Soll-Kopfes zum Anbringen an der Felge oder größer als dieser ausgeführt wird.

30. Verfahren nach einem der Ansprüche 18 bis 29, das nach Schritt f) außerdem den Schritt des Ausführens einer Oberflächenschutzbehandlung umfasst.

## Revendications

1. Rayon (10) pour une roue de bicyclette, comprenant un corps allongé (20) de matériau métallique s'étendant le long d'un axe longitudinal X-X et comportant :
- une première portion d'extrémité (30) à fixer à un moyeu (100) d'une roue de bicyclette ; ladite première portion d'extrémité (30) étant formée de façon à définir une tête élargie ayant une surface de butée contre le moyeu ;
- une seconde portion d'extrémité (40) à fixer à une jante d'une roue de bicyclette ;
- une portion intermédiaire (50) entre lesdites première et seconde portions d'extrémité (30, 40), dans laquelle ladite portion intermédiaire (50) comprend une portion (60) qui est aplatie dans une direction transversale Z perpendiculaire audit axe longitudinal X-X et s'étendant le long dudit axe longitudinal X-X jusqu'à ladite première portion d'extrémité (30) ;
dans lequel ladite première portion d'extrémité (30) est aplatie dans ladite direction transversale Z ; **caractérisé en ce que** ladite surface de butée de ladite tête élargie est progressivement jointe à ladite portion aplatie (60) de ladite portion intermédiaire (50) le long dudit axe longitudinal X-X.

2. Rayon selon la revendication 1, dans lequel l'épaisseur de ladite première portion d'extrémité (30) est plus grande que l'épaisseur de ladite portion aplatie (60).

3. Rayon selon la revendication 1, dans lequel l'épaisseur de ladite première portion d'extrémité (30) est sensiblement la même que l'épaisseur de ladite portion aplatie (60).

4. Rayon selon la revendication 1, dans lequel l'épaisseur de ladite première portion d'extrémité (30) est plus petite que l'épaisseur de ladite portion aplatie (60).

5. Rayon selon l'une quelconque des revendications précédentes, dans lequel ladite portion aplatie (60) de ladite portion intermédiaire (50) comprend une zone (80) adjacente à ladite première portion d'extrémité (30) et dans laquelle ladite première portion d'extrémité (30) a une section transversale ayant un profil qui est sensiblement le même que le profil de la section transversale de ladite portion aplatie (60) de ladite portion intermédiaire (50) au niveau de ladite zone (80) adjacente à ladite première portion d'extrémité (30).

6. Rayon selon l'une quelconque des revendications précédentes, dans lequel ladite seconde portion d'extrémité (40) est filetée et dans lequel ladite portion intermédiaire (50) comprend une portion cylindrique (70) s'étendant le long dudit axe longitudinal X-X et adjacent à ladite seconde portion d'extrémité (40).

7. Rayon selon l'une quelconque des revendications précédentes, dans lequel ladite portion aplatie (60) de ladite portion intermédiaire (50) a, le long dudit axe longitudinal X-X, des sections transversales de superficie différente.

8. Rayon selon la revendication 7, dans lequel ladite portion aplatie (60) de ladite portion intermédiaire (50) a, le long dudit axe longitudinal X-X, des sections transversales de superficie croissante vers ladite zone (80) de ladite portion aplatie (60) adjacente à ladite première portion d'extrémité (30) et vers ladite portion cylindrique (70) adjacente à ladite seconde portion d'extrémité (40).

9. Rayon selon l'une quelconque des revendications précédentes, dans lequel ladite première portion d'extrémité (30) comprend au moins une surface avant sensiblement plate (31, 32) s'étendant le long dudit axe longitudinal X-X et définissant une surface de butée avant de ladite première portion d'extrémité (30) sur un moyeu (100) d'une roue de bicyclette lorsque ledit rayon (10) est associé audit moyeu (100).

10. Rayon selon la revendication 9, dans lequel ladite au moins une surface avant (31, 32) s'étend le long dudit axe longitudinal X-X sur une portion de longueur plus grande que la dimension de ladite première portion d'extrémité (30) dans ladite direction transversale Z.

11. Rayon selon l'une quelconque des revendications précédentes, dans lequel ladite première portion d'extrémité (30) comprend, le long dudit axe longitudinal X-X, une paire de portions de surface latérale opposées sensiblement cylindriques (33, 34) définissant des surfaces de butée latérale et axiale de ladite première portion d'extrémité (30) sur un moyeu (100) d'une roue de bicyclette lorsque ledit rayon (10) est associé audit moyeu (100).

12. Roue de bicyclette, comprenant :
- un moyeu (100) ;
- une jante ;
- une pluralité de rayons (10) s'étendant entre ledit moyeu (100) et ladite jante;
**caractérisé en ce que** les rayons (10) de ladite pluralité de rayons sont du type revendiqué dans l'une quelconque des revendications 1 à 11.

13. Roue de bicyclette selon la revendication 12, dans laquelle ledit moyeu (100) comprend une surface annulaire avant (120) sur laquelle une pluralité de sièges (110) sont formés pour loger lesdites premières portions d'extrémité (30) desdits rayons (10).

14. Roue de bicyclette selon la revendication 13, dans laquelle chacune desdites premières portions d'extrémité (30) de rayon comprend au moins une première surface avant sensiblement plate (31, 32) s'étendant le long dudit axe longitudinal X-X et fonctionnant en butée contre une surface avant sensiblement plate correspondante (111) d'un siège respectif (110) formé dans le moyeu (100).

15. Roue de bicyclette selon la revendication 13 ou 14, dans laquelle chacune desdites premières portions d'extrémité (30) de rayon comprend une paire de portions de surface latérale opposées sensiblement cylindriques (33, 34) qui fonctionnent en butée contre des portions de surface latérale opposées correspondantes (112, 113) d'un siège respectif (110) formé dans le moyeu (100), dans lequel lesdites surfaces latérales (112, 113) de chacun desdits sièges (110) ont une forme correspondant à celle desdites surfaces latérales (33, 34) desdites premières portions d'extrémité (30) de rayon.

16. Roue de bicyclette selon l'une quelconque des revendications 13 à 15, dans laquelle lesdits sièges (110) sont formés sur ladite surface avant (120) du moyeu (100) selon une orientation sensiblement tangentielle.

17. Roue de bicyclette selon l'une quelconque des revendications 13 à 15, dans laquelle lesdits sièges (110) sont formés sur ladite surface avant (120) du moyeu (100) selon une orientation sensiblement radiale.

18. Procédé de fabrication d'un rayon (10) pour une roue de bicyclette selon l'une quelconque des revendications 1 à 11, comprenant les étapes consistant à :
a) couper un filament de longueur prédéterminée ayant une section circulaire à partir d'un fil de matériau métallique dans un état recuit ayant un diamètre prédéterminé ;
b) mettre en forme le filament pour obtenir des sections transversales de superficie différente le long de son axe longitudinal ;
c) écraser le filament le long de son axe longitudinal pour obtenir au moins une portion de filament aplatie s'étendant à partir d'une première extrémité libre du filament censé définir une tête élargie (30) à fixer au moyeu jusqu'à une portion aplatie (60) d'une section intermédiaire du filament ; ladite tête élargie (30) ayant une surface de butée contre le moyeu qui est progressivement jointe à ladite portion aplatie (60) ;
d) calibrer la longueur du filament aplati ;
e) soumettre le filament aplati à un traitement thermique d'emboutissage - revenu ;
f) fileter une seconde extrémité libre du filament pour définir une tête filetée à fixer à la jante.

19. Procédé selon la revendication 18, comprenant également, avant l'étape d), une étape de mise en forme de ladite extrémité libre de la portion de filament aplatie pour définir une tête à fixer au moyeu progressivement jointe à la portion de filament aplatie restante.

20. Procédé selon la revendication 19, dans lequel l'étape a) de découpe du filament est réalisée en commençant à partir d'un fil métallique ayant une section transversale ayant une superficie égale à la superficie souhaitée de la section transversale de la tête à fixer au moyeu.

21. Procédé selon la revendication 19, dans lequel l'étape a) de découpe du filament est réalisée en commençant à partir d'un fil métallique ayant une section transversale de superficie égale à la superficie souhaitée de la section transversale de la tête à fixer à la jante.

22. Procédé selon l'une quelconque des revendications 19 à 21, dans lequel l'étape b) de mise en forme du filament comprend l'étape de déformation plastique du filament pour obtenir des sections transversales de superficie croissante en commençant à partir de ladite portion intermédiaire du filament vers lesdites extrémités libres.

23. Procédé selon la revendication 22, dans lequel l'étape b) comprend une étape intermédiaire consistant à réaliser un traitement thermique de recuit.

24. Procédé selon l'une quelconque des revendications 18 à 23, dans lequel l'étape c) d'écrasement du filament est réalisée par moulage ou stratification.

25. Procédé selon la revendication 24, dans lequel l'étape c) comprend une étape intermédiaire consistant à réaliser un traitement thermique de recuit.

26. Procédé selon l'une quelconque des revendications 18 à 20 et 22 à 25, dans lequel l'étape d) de mise en forme de l'extrémité libre de la portion de filament aplatie est réalisée par l'intermédiaire d'un écrasement par moulage.

27. Procédé selon l'une quelconque des revendications 18, 19 et 22 à 25, dans lequel l'étape d) de mise en forme de l'extrémité libre de la portion de filament aplatie est réalisée par refoulement.

28. Procédé selon l'une quelconque des revendications précédentes, dans lequel l'étape f) de filetage de la seconde extrémité libre du filament est réalisée par laminage d'un filament ayant un diamètre de prétraitement prédéterminé selon le filetage souhaité et inférieur au diamètre de la tête souhaitée à fixer à la jante.

29. Procédé selon l'une quelconque des revendications 18 à 27, dans lequel l'étape f) de filetage de la seconde extrémité libre du filament est réalisée par arasage d'un filament ayant un diamètre de prétraitement selon le filetage souhaité et supérieur ou égal au diamètre de la tête souhaitée à fixer à la jante.

30. Procédé selon l'une quelconque des revendications 18 à 29, comprenant également, après l'étape f), l'étape consistant à réaliser un traitement de protection de surface.
